# EUROPEAN PATENT SPECIFICATION

(11) **EP 3 368 421 B1**
(45) Date of publication and mention of the grant of the patent: **31.03.2021**
(21) Application number: 16859150.1
(22) Date of filing: 28.10.2016
(51) Int. Cl.: B65B 3/04, A61J 1/22, B25J 19/04, B25J 9/18, B25J 9/00, B25J 21/00, B65B 43/42

(54) **ASEPTIC FILLING SYSTEM AND METHOD**
ASEPTISCHES ABFÜLLSYSTEM UND ABFÜLLVERFAHREN
SYSTÈME ET PROCÉDÉ DE REMPLISSAGE ASEPTIQUE

(30) Priority: 28.10.2015 US 201562247717 P
(43) Date of publication of application: 05.09.2018
(73) Proprietor: VANRX Pharmasystems Inc., Burnaby, BC V5J 5J2 (CA)
(72) Inventor: DIAZ GUERRERO, Carlos Alberto, Burnaby, BC V5J 5J2 (CA)
(74) Representative: Boco IP Oy Ab
(86) International application number: PCT/IB2016/001739
(87) International publication number: WO 2017/072591

(56) References cited:
- EP-B1- 0 678 205
- US-A- 4 530 202
- US-A1- 2006 048 844
- US-A1- 2006 136 095
- US-A1- 2009 223 592
- US-A1- 2010 204 713
- US-A1- 2010 241 270

## Description

### CROSS REFERENCE TO RELATED APPLICATIONS

This application claims priority to US Patent Application Serial No. 62/247,717 filed October 28, 2015. The subject matter of this application also relates to that disclosed in U.S. Patent Application 13/744,408 filed January 17, 2013, which is a divisional of U.S. Patent Application 12/393,183 filed February 26, 2009 and claims the benefit of U.S. Provisional Patent Application Serial No. 61/033,682, filed March 4, 2008.

### BACKGROUND OF THE INVENTION

### Field of the Invention.

The invention relates to automated filling systems and methods, including aseptic systems and methods for the filling of pharmaceutical containers with pharmaceuticals under controlled conditions.

### Background

By its very nature, the production of sterile pharmaceuticals by humans can be problematic. Humans can be a large source of microbial contamination. Also, with increased potencies, some drugs can be hazardous in occupational exposure. For at least these reasons, robotics have been used in dosage manufacturing to limit human contact. Isolator technology, which provides a solid barrier between a process and humans, can also be used in dosage manufacturing to limit human contact US 2009223592 A1 describes systems for filling containers in a chamber comprising a filling arm and an optical sensor configured to sense the openings of the containers. EP 0678205 B1 describes assembly systems using sensing systems.

To enable sterile processing, isolator technology has evolved to adapt various vapor and gas sterilization systems, thereby bringing about an advance in aseptic processing. Articulated cleanroom robots have been employed which utilize internal negative pressure with an exhaust to generate cleanroom capability. With the chemical sterilization and handling of potent drugs within the isolator, an internal negative pressure cleanroom with an exhaust is not generally feasible, due largely to the leakage potential.

Sterile manufacturing is performed by various companies, often outsourced companies, including small cleanroom facilities and large pharmaceutical facilities. Often, small cleanroom facilities are not optimally equipped for pharmaceutical filling operations, which can lead to a lower quality product and higher risk for the outsourcing company. Conversely, large pharmaceutical facilities with high-speed lines generally can produce a higher quality product, but have relatively limited flexibility with respect to batch size, variations of product, and timing.

### SUMMARY OF THE INVENTION

In a first aspect, a system is provided for aseptically filling a tray of pharmaceutical containers with a pharmaceutical product, comprising: a chamber capable of maintaining an aseptic condition, a sensor aseptically disposed with respect to the chamber, the sensor having a sensing cone within the chamber, an articulated filling arm and a tray of pharmaceutical containers disposed within the chamber, the articulated filling arm and the tray having a range of motion within the sensing cone, a reflective surface positioned within the sensing cone, wherein the reflective surface includes a retroreflector disposed to reflect to the sensor light from a light source, the light from the light source perpendicularly impinging on the tray of pharmaceutical containers such that openings of containers held by the tray exhibit high contrast with respect to tray to the sensor, the retroreflector having a retroflective sheet covered by a transparent sheet, the retroreflective sheet being located underneath the base of the chamber with the transparent sheet aseptically embedded within the base of the chamber, and a controller in data communication with the sensor and with the filling arm and configured for: obtaining image information from the sensor, determining the locations of openings of the containers within the sensing cone based on the image information, and automatically guiding the filling arm to fill the containers with the product based on the locations of openings of the containers.

The system may further comprise a retroreflector aseptically disposed with respect to the chamber, wherein the retroreflector is further disposed to retroreflect to the sensor light perpendicularly impinging on the retroreflector. The system may further comprise an illuminator disposed to illuminate the retroreflector with substantially collimated light. The system may further comprise a holding arm for holding the tray, wherein the controller is in data communication with the holding arm, and the controller is configured for automatically guiding based on the image information the holding arm to position the tray in a location in a light path between the illuminator and the retroreflector. The controller may be configured for automatically guiding based on the image information the holding arm to position the tray The automatically positioning may be such that a planar surface of the tray is substantially perpendicular to the collimated light. The system may further comprise a stoppering arm for stoppering the containers, wherein the controller is in data communication with the stoppering arm, and the controller is configured for automatically guiding based on the image information the stoppering arm to stopper the containers.

The sensor may be disposed at a large enough distance from the retroreflector to collect largely the retroreflected light. The sensor may comprise the illuminator and an imager, wherein the illuminator is disposed annularly about the imager. The sensor may comprise an imaging detector, a fixed focal length lens, and a Fresnel lens. The illuminator for use with the Fresnel lens may be one that provides substantially monochromatic light. In other embodiments the sensor may comprise an imaging detector and a telecentric lens, wherein the imager detector is disposed to receive the retroreflected light through the telecentric lens.

In another aspect, a method is provided for aseptically filling pharmaceutical containers with a product, the method comprising establishing an aseptic condition within a chamber, maintaining the aseptic condition while providing within the chamber a tray holding within openings in the tray a plurality of pharmaceutical containers, automatically positioning the tray with the plurality of containers in an illumination path of an illuminator, and positioning a retroreflector to reflect light perpendicularly impinging on the tray and containers such that openings of containers held by the tray exhibit high contrast with respect to tray to a sensor, the retroreflector having a retroreflective sheet covered by a transparent sheet, the retroreflective sheet being located underneath the base of the chamber with the transparent sheet aseptically embedded within the base of the chamber, automatically directing light from the illuminator through the tray and containers, automatically obtaining image information about the tray and containers based on light received through the containers by the sensor, identifying based on the image information centers of openings of at least a portion of the plurality of containers, and automatically filling the at least, a portion of the plurality of containers with the product based on the identified openings.

The method may further comprise automatically stoppering the openings of the at least a portion of the plurality of containers. The automatically stoppering may comprise operating an articulated stoppering arm to collect stoppers from known locations of stoppers, and operating the articulated stoppering arm to stopper the openings of the at least a portion of the plurality of containers.

The automatically illuminating the tray and containers may comprise illuminating the tray and containers with substantially collimated light. The automatically positioning the tray may comprise operating an articulated holding arm to automatically position the tray. The automatically positioning may be such that a planar surface of the tray is substantially perpendicular to the collimated light. The automatically filling may comprise operating an articulated filling arm to automatically fill the at least a portion of the plurality of containers.

The automatically obtaining image information may comprise imaging with a sensor disposed at a large enough distance from the retroreflector to collect largely the retroreflected light. In other embodiments, the automatically obtaining image information may comprise imaging the tray and containers using a telecentric lens. The automatically obtaining image information may in further implementations comprise imaging the tray and containers using a Fresnel lens and a fixed focal length lens. In using a Fresnel lens, the automatically illuminating the tray and containers with light may comprise automatically illuminating the tray and containers with substantially monochromatic light.

Systems according to the invention can help to automate sterile processing inside isolator units by allowing allow the accurate tracking of pharmaceutical containers and the accurate location of their openings. Such systems can perform this tracking in a highly robust and tolerant manner.

### BRIEF DESCRIPTION OF THE DRAWINGS

The above-mentioned and other features and objects of this invention, and the manner of attaining them, will become more apparent and the invention itself will be better understood by reference to the following description of an embodiment of the invention taken in conjunction with the accompanying drawings, wherein:
FIG. 1 is a perspective view of a robotic filling system according to embodiments of the disclosed subject matter.
FIG. **2** is a plan view of a robotic filling system according to embodiments of the disclosed subject matter.
FIG. **3** is another perspective view of a robotic filling system according to embodiments of the disclosed subject matter.
FIG. **4** is diagram showing the use of substantially collimated light in the functioning of a sensor of the robotic filling system of FIG. **3****.**
FIG. **5** shows a nest of pharmaceutical containers illuminated with substantially collimated light from an illuminator annularly disposed with respect to a sensor as per an embodiment of the disclosed subject matter.
FIG. **6** shows a nest of pharmaceutical containers imaged by a sensor employing a telecentric lens as per an embodiment of the disclosed subject matter.
FIG. **7** shows a nest of pharmaceutical containers imaged by a sensor employing a Fresnel lens as per an embodiment of the disclosed subject matter.
FIG. **8** shows one construction of a retroreflector for use in embodiments according to the disclosed subject matter.
FIG. **9** shows a flowchart for a method for filling pharmaceutical containers according to the disclosed subject matter.

Corresponding reference characters indicate corresponding parts throughout the several views. Although the drawings represent embodiments of the present invention, the drawings are not necessarily to scale and certain features may be exaggerated in order to better illustrate and explain the present invention. Some drawings may exclude elements for the sake of clarity, the excluded elements being shown in other drawings. The flowcharts and screen shots are also representative in nature, and actual embodiments of the invention may include further features or steps not shown in the drawings. The exemplifications set out herein illustrate embodiments of the invention, in one form, and such exemplifications are not to be construed as limiting the scope of the invention in any manner.

### DESCRIPTION OF EMBODIMENTS OF THE PRESENT INVENTION

The embodiments disclosed below are not intended to be exhaustive or limit the invention to the precise form disclosed in the following detailed description. Rather, the embodiments are chosen and described so that others skilled in the art may utilize their teachings.

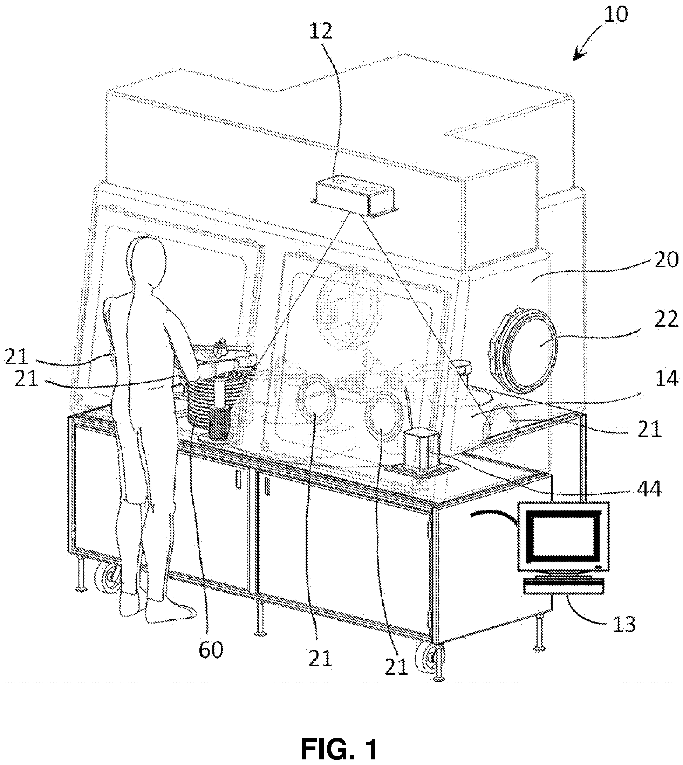

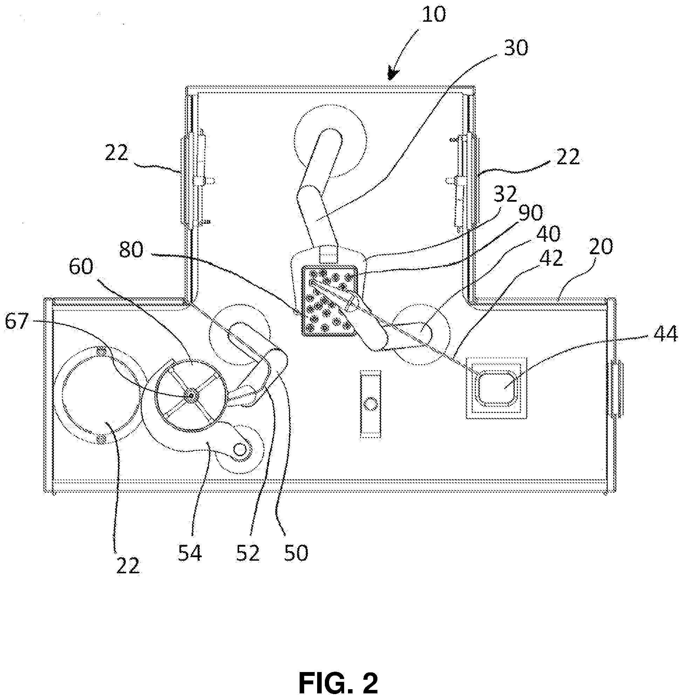

Referring to FIGS. **1** and **2****,** an aseptically sealed robotic filling system **10** is configured to fill containers **90** (see Fig. **2****)** with a product. The product may be, for example without limitation, at least one of a liquid product, a pharmaceutical product, or potentially toxic or otherwise harmful product. As will be described in more detail below, the filling system **10** can be configured to locate, target, and fill randomly placed containers **90** within a tray or nest **80,** without the need for mechanical container handling parts, or other change parts for filling equipment. Many types of containers **90** are contemplated herein, including, but not limited to vials, syringes, bottles, beakers, test tubes, etc.

Filling system **10** may comprise a chamber **20** configured to maintain a desired environmental condition. For the sake of clarity, the internal details of chamber **20** are shown in plan view in FIG. **2****.** For example without limitation, chamber **20** may be an isolator chamber capable of maintaining an aseptic condition within chamber **20.** Chamber **20** may comprise one or more ports **22** for access to the interior of the chamber **20.** At least one port **22** may be, for example, a rapid transfer port to allow for aseptic transfer of articles from a transfer container, such as a transfer isolator, to chamber **20.** In some embodiments, the at least one port **22** may be a rapid transfer port configured to mate with a door of the transfer container such that the unsterilized exterior surfaces mate against and attach to each other before opening. The mating may be configured such that the unsterilized exterior surfaces of the door and the at least one port **22** are contained against each other when the port **22** and door combination is opened. This arrangement limits contamination of the interior environments of the transfer container and the chamber **20.**

Filling system **10** may comprise proximity sensors or other suitable devices capable of sensing when a transfer container is engaged with the at least one port **22.** This arrangement prevents opening of the at least one port **22** while not engaged with a transfer container and avoids contamination of the interior environmental condition.

Chamber **20** may include one or more glove holes **21** disposed in the walls of the chamber **20.** Glove holes **21** may be used to manually manipulate objects within chamber **20** without opening chamber **20** or otherwise compromising the environmental condition within chamber **20.**

A filling arm **40** (See FIG. **2****)** may be disposed within the chamber **20.** Filling arm **40** may be a compound articulated robotic arm. Filling arm **40** may comprise filling tubing **42** extending from a pump **44** to a point at an end of filling arm **40.** An outlet of the filling tube **42** may include a valve, filling needle, or other flow control device to control discharge of the product from the filling tubing **42.** The filling tubing **42** may extend from a reservoir and through pump **44.** Pump **44** may be configured to selectively urge the product from the reservoir, through the filling tubing **42,** and into the containers **90.** Pump **44** may a peristaltic pump, such as a rotary or a linear peristaltic pump. Filling arm **40** is disposed and configured to position the outlet of filling tubing **42** over each container **90** to allow filling of containers **90** with the product. Controller **13** is in data communication with pump **44** in order to control pump **44.**

Filling system **10** may include a sensor **12** for sensing containers **90** within chamber **20.** Sensor **12** is disposed to sense openings of containers **90.** The sensor 12 may be an optical sensor, a camera system, or a laser system. Sensor **12** may be mounted at a top surface of chamber **20** and is disposed to sense within the chamber **20** an area described by a field of view or sensing cone **14.** Controller **13** is in data communication with sensor **12** to control sensor **12** and retrieve information from sensor **12.** In some embodiments, optical sensor **12** may be configured to locate containers **90** within the field of view or sensing cone **14** and target centers of the openings of the containers **90.** The locations of the sensed openings of the containers **90** may be used to guide filling arm **40** to fill containers **90** with the product. The targeted centers may be used by controller **13** for controlling filling arm **40.** Controller **13** is in data communication with filling arm **40.** Optical sensor **12** may be configured to perform a pre-fill inspection of containers **90** to determine if any containers are defective or otherwise unfit for filling. If a defective container is found, the container can be ignored during the filling process so as to reduce waste of product and limit potential leakage.

The structure, functions, use, and operation of filling arm **40** are described in detail in U.S. Patent Application 13/744,408 filed January 17, 2013, which is a divisional of U.S. Patent Application 12/393,183 filed February 26, 2009 and claims the benefit of U.S. Provisional Patent Application Serial No. 61/033,682, filed March 4, 2008. Filling arm **40** may be of differing configurations capable of functioning in the manners described in the present specification and in the above-mentioned U.S. patent applications Serial Nos. 12/393,183 and 13/744,408. Filling arm **40** may be a servo-driven robotic arm. Filling arm **40** may be controlled by controller **13.**

A holding arm **30** may be disposed within the chamber **20** for transporting and holding the containers **90** within chamber **20.** Holding arm **30** may be a compound articulated robotic arm. Controller **13** is in data communication with holding arm **30** for controlling holding arm **30.** Holding arm **30** may be used to perform multiple tasks, including, for example, opening doors of ports **22** and transporting and holding containers **90.** To this end, holding arm **30** may comprise an end effect tool **32.** In some embodiments the end effect tool may be generally U-shaped, as shown in FIG. **2****.** In some embodiments, the end effect tool **32** may include different configurations depending upon the interactions and tasks required of the holding tool. Holding arm **30** an end effect tool **32** may be disposed and configured for opening and closing ports **22** to allow for containers **90** to enter and exit chamber **20.** For example, a transfer isolator or other such transfer container may be used to transfer sterilized containers into chamber **20.** In one embodiment, once a transfer isolator or other transfer container is attached to the port **22,** as signaled by the proximity sensor or other such device, the controller **13** may control the holding arm **30** to open the port **22.**

Holding arm **30** can be used to interact with a door of the at least one port **22** to open the door, thereby allowing the holding arm **30** to access the interior of the transfer isolator or transfer container, while generally maintaining a desired environmental condition within the chamber **20.** In one example, the containers **90** are held on a tray **80** or other such holder configured to allow the holding arm **30** to pick up the tray **80.** The end tool **32** may be extended into the transfer isolator or transfer container and positioned to pick up the tray **80** to transport it into the chamber **20.** Once the tray **80** is transported within the chamber **20,** the port **22** may be closed by the holding arm **30.**

In another example, the port **22** may remain open, for instance, to replace the tray **80** of containers **90** once the containers **90** have been filled. In yet another example, once the containers **90** have been filled, the holding arm **30** may be used to open a port **22,** as described above, and to place the tray **80** of filled containers **90** within a transfer isolator or other transfer container engaged thereto for removal of the filled containers **90** from within the chamber **20.**

Referring to FIG. **2****,** once the tray **80** is received by the end effect tool **32,** the holding arm **30** transports the tray **80** to a filling position within chamber **20.** The filling position may be a location within the chamber **20** that is within the sensing cone **14** and within reach of the filling arm **40.** Tray **80** may be positioned such that collimated light impinges perpendicularly on tray **80** and on the openings of containers **90.**

Once the tray **80** of containers **90** is in the filling position, the sensor **12** can be activated to locate the containers **90** and target the openings of the containers **90.** Pattern recognition software may be employed to analyze data from the sensor **12** to identify suitable filling locations corresponding to the openings of the containers **90.** In this way, the containers **90** in various positions on the tray **80,** including random positions, may be located and targeted by the sensor **12** and pattern recognition software and need not be positioned with any particular pattern or spacing. Additionally, such locating and targeting may be performed regardless of the size of the containers **90.** The pattern recognition software may be implemented in controller **13.** In other embodiments, the pattern recognition software may be implemented in a computer or control module different from the controller **13** of the filling system **10.** The positions of the containers **90** may be used to control the filling arm **40** to travel to the predetermined filling locations and dispense the product into the containers **90.**

The structure, functions, use, and operation of holding arm **30** are described in detail in U.S. Patent Application 13/744,408 filed January 17, 2013, which is a divisional of U.S. Patent Application 12/393,183 filed February 26, 2009 and claims the benefit of U.S. Provisional Patent Application Serial No. 61/033,682, filed March 4, 2008. Holding arm **30** may be of differing configurations capable of functioning in the manners described in the present specification and in the abovementioned U.S. patent applications Serial Nos. 12/393,183 and 13/744,408. Holding arm **30** may be a servo-driven robotic arm. Holding arm **30** may be controlled by controller **13.**

A stoppering arm **50** may be disposed within the chamber **20** and configured to pick up and place stoppers or other closures in the openings of the containers **90.** Controller **13** is in data communication with stoppering arm **50** for controlling stoppering arm **50.** Closures contemplated for use with the filling system **10** include, without limitation, lyophilization stoppers, serum stoppers, syringe stoppers, and the like. Stoppering arm **50** may comprise a gripping implement (not shown) at the end thereof. Stoppering arm **50** may comprise tubing **52** extending from a vacuum source to an end of the stoppering arm **50.** The tubing **52** may connect to the gripping implement, allowing the gripping element to be actuated by pulling of a vacuum through the tubing **52.** The application and removal of vacuum on tubing **52** may be controlled by controller **13** via a suitable vacuum pump (not shown). The gripping implement may comprise mechanical grasping members, such as mechanically-actuated fingers or other such mechanical grasping mechanisms.

Stoppering arm **50** may be configured and disposed to pick up stoppers from a stopper source. In one embodiment shown in FIG. **2****,** the stopper source is a stopper disc stack **60** comprising a stack of one or more stopper discs stacked on a spindle **67** and axially slidable along the spindle **67.** The stopper discs may be configured to retain a plurality of stoppers. Filling system **10** may include a disc holder arm **54** to pick up discs from disc stack **60** after all the stoppers or other closures have been removed therefrom to thereby expose the stoppers or other closures of other discs lower down in the disc stack **60.** Controller **13** is in data communication with disc holder arm **54** for controlling disc holder arm **54.** The stopper discs, stoppers, the arrangement of stoppers on discs, and the method by which the stopper arm **60** and disc holder arm **54** are employed to obtain stoppers from the stopper disc stack to stopper containers **90** are described in detail in U.S. Patent Application 13/744,408 filed January 17, 2013, which is a divisional of U.S. Patent Application 12/393,183 filed February 26, 2009 and claims the benefit of U.S. Provisional Patent Application Serial No. 61/033,682, filed March 4, 2008. Stoppering arms **50** may be of differing configurations capable of functioning in the manners described in the present specification and in the abovementioned U.S. patent applications Serial Nos. 12/393,183 and 13/744,408. Stoppering arm **50** may be a servo-driven robotic arm.

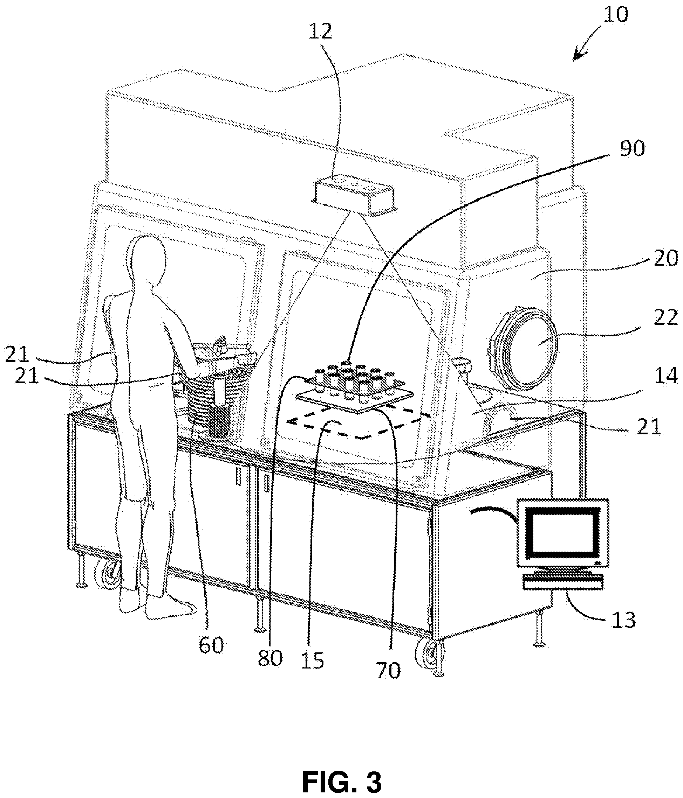

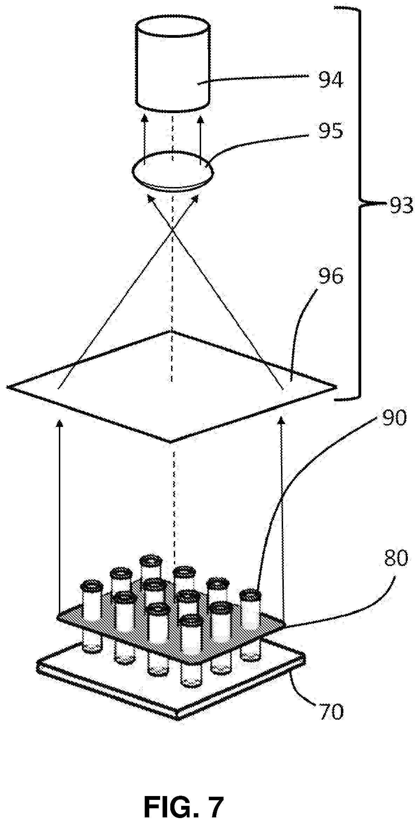

FIG. **3** shows the sensing aspects of filling system **10** in more detail. For the sake of clarity, internal items to chamber **20** that are not immediately relevant to sensing and that may obscure the sensing subsystem and its working are not shown. In this respect, the holding arm **30,** filling arm **40,** stoppering arm **50,** and disc holder arm **54,** for example, are not shown in FIG. **3****,** but are instead shown in detail in FIG. **2****.** In FIG. **3****,** pharmaceutical containers **90** are held in tray **80** above or on a retroreflector **70.** The details of retroreflector **70** are discussed later at the hand of FIG. **7****.** Retroreflector **70** ensures that adequate light returns toward senor **12** to enable the imaging of the openings of containers **90** to a degree of accuracy that allows their centers to be determined accurately enough to guide filling arm **40** to fill containers **90** with the product. While a retroreflector is presently preferred, a less reflective surface, such as a white surface, may be sufficient for some applications.

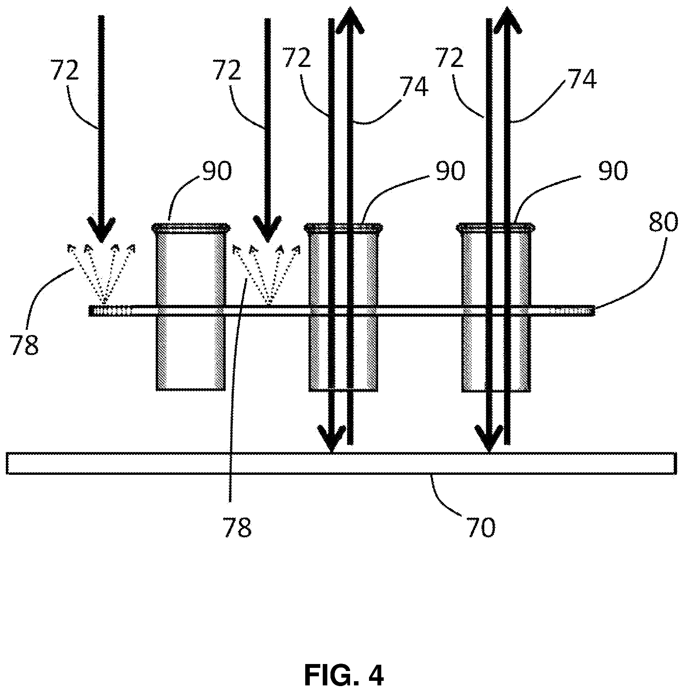

In FIG. **4** substantially collimated light **72** from a suitable illuminator, later discussed, is substantially perpendicularly incident on tray **80** holding pharmaceutical containers **90** and is reflected in multiple directions as generally reflected light **78** by tray **80.** The light reflected directly back perpendicular to the tray **80** is thus much reduced in intensity. The portion of the substantially collimated light that is perpendicularly incident on containers **90** is transmitted through containers **90** and the bulk of this transmitted light is reflected back through containers **90** by retroreflector **70** as retroreflected light **74.** As long as the incident light is suitably collimated, retroreflected light **74** will allow the formation of images by sensor **12** of FIG. **3** in which the container openings will exhibit high contrast with respect to significantly darker tray **80,** the image of which relies on much less intense generally reflected light **78.** This contrast allows for accurate determination of the centers of the openings in containers **90.** Suitable methods for determining the centers of the containers **90,** such as software based image analysis and pattern recognation, are well-established and will not be discussed further in this specification. The illumination is considered "substantially collimated" if it produces enough contrast by the above means to allow the openings of containers **90** to be unequivocally delineated in the software employed for image analysis. This allows a limited degree of divergence or convergence in incident illumination, which is dependent on the distance of the openings of the containers **90** from retroreflector **70.**

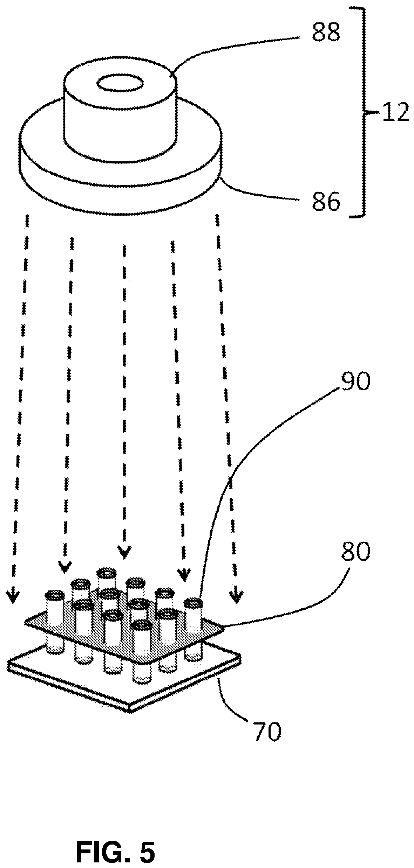

FIG. **5** shows one embodiment of the illumination and imaging principle depicted in FIG. **4****.** In FIG. **5** sensor **12** comprises an imager **88** and an illuminator **86** annularly disposed about imager **88.** By making the surface area of the illuminator large enough and locating the sensor **12** suitably far from tray **80,** it may be ensured that the light impinging on the combination of tray **80** and pharmaceutical containers **90** is collimated to a degree that is suitable for the imaging to proceed by the mechanism described at the hand of FIG. **4****.** The challenge in imaging the openings of the containers is generally not primarily one of either resolution or enough light, but rather one of suitable contrast and depth of focus. In this embodiment the sensor **12** is located far enough from tray **80** to ensure that substantially collimated light illuminates tray **80.** This arrangement also relaxes the demands on any imaging lens in imager **88** and avoids having complex and expensive lenses exposed to the gases and vapors employed to render the interior of chamber **20** aseptic. To this end, sensor **12** in its various embodiments may be aseptically disposed in the roof of chamber **20** by, for example without limitation, disposing it behind a transparent window sealed aseptically to the roof of chamber **20.** In all contemplated arrangements, sensor **12** is aseptically disposed with respect to chamber **20,** whether interior or exterior to chamber **20.**

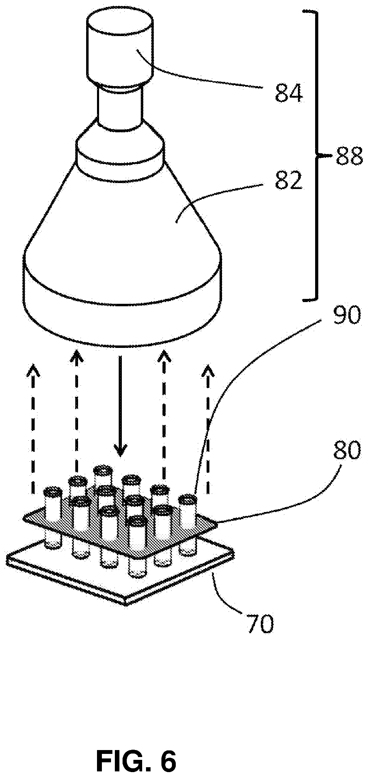

FIG. **6** shows another embodiment of the imaging aspect of system **10.** In FIG. **6** imager **88** comprises an imaging detector **84** and a telecentric lens **82.** Light from a suitable source (not shown) is made to impinge on tray **80** and is reflected as in FIG. **4****.** This embodiment relies on the telecentric nature of the lens to ensure that the image is formed from light impinging substantially perpendicularly on lens **82,** and therefore passing through its aperture, rather than on the distance of the lens from tray **84** as in the embodiment of FIG. **5****.** A lens is sufficiently telecentric for a given system if it produces enough contrast by the above means to allow the openings of containers **90** to be unequivocally delineated in the software employed for image analysis within its useful range in the system.

FIG. **7** shows a further embodiment of the imaging aspect of system **10.** In FIG. **7** imager **93** comprises an imaging detector **94,** a fixed focal length lens **95,** and a Fresnel lens **96** of at least the dimensions of the tray **80.** The benefit of this solution lies in its inherent low cost. Fresnel lenses are vastly less costly than telecentric lenses of the same lens size. Substantially collimated light from a suitable source (not shown) is made to impinge perpendicularly on tray **80** and is reflected as in FIG. **4****.** To address the chromatic aberration inherent in Fresnel lenses, the illumination of tray **80** may done with substantially monochromatic light from suitable light emitting diodes.

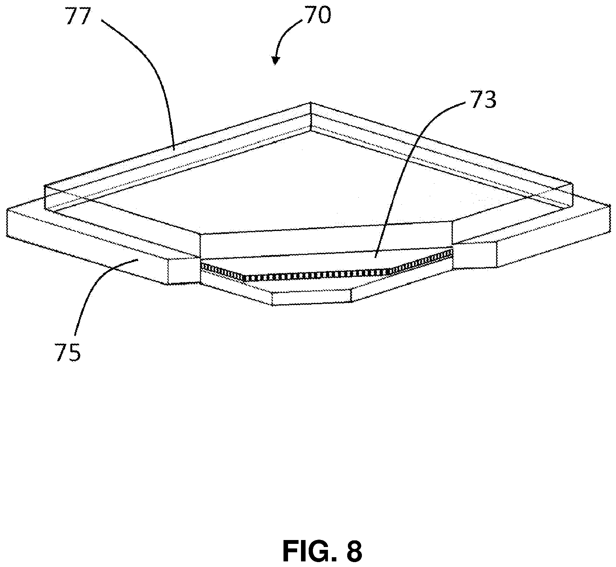

FIG. **8** shows one possible embodiment of retroreflector **70** in which retroreflective sheet **73** is mounted in a recessed base **75.** Base **75** may be material compatible with the requirements of an aseptic environment and resistant to the gases and vapors employed to render the interior of chamber **20** aseptic. By way of non-limiting example, one suitable material for base **75** is a metal, such as stainless steel, titanium, aluminum, or hastelloy. The metal can be coated or otherwise treated to provide a non-stick or decreased-stick surface, using, for instance, a hard anodizing process or other such treatment or coating processes. Retroreflective sheet **73** is covered by a transparent sheet **77** compatible with the requirements of an aseptic environment and resistant to the gases and vapors employed to render the interior of chamber **20** aseptic. By way of non-limiting example, one suitable material for transparent sheet **77** is glass. Sheet **77** may be sealed to base **75** by means of suitable adhesive. This construction ensures that retroreflector **70** is aseptically disposed within chamber **20.** In another embodiment retroreflective sheet **73** may be located underneath the base of chamber **20** with transparent sheet **77** aseptically embedded within the base of chamber **20.** In all contemplated arrangements, retroreflector **70** is aseptically disposed with respect to chamber **20,** whether interior or exterior to chamber **20.**

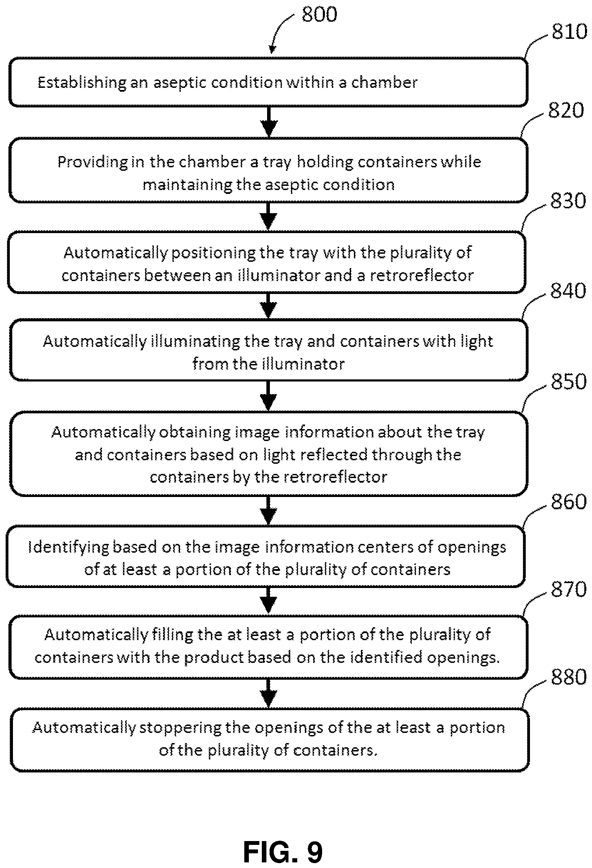

In another aspect, described at the hand of the flow chart in FIG. **9****,** a method **[800]** is provided for aseptically filling pharmaceutical containers with a product, the method comprising establishing **[810]** an aseptic condition within a chamber, maintaining **[820]** the aseptic condition while providing within the chamber a tray holding within openings in the tray a plurality of pharmaceutical containers, automatically positioning **[830]** the tray with the plurality of containers between an illuminator and a retroreflector, automatically illuminating **[840]** the tray and containers with light from the illuminator, automatically obtaining image information **[850]** about the tray and containers based on light reflected through the containers by the retroreflector, **[860]** identifying based on the image information centers of openings of at least a portion of the plurality of containers, and automatically filling **[870]** the at least a portion of the plurality of containers with the product based on the identified openings.

The method may further comprise automatically stoppering **[880]** the openings of the at least a portion of the plurality of containers. The automatically stoppering **[880]** may comprise operating an articulated stoppering arm to collect stoppers from known locations of stoppers, and operating the articulated stoppering arm to stopper the openings of the at least a portion of the plurality of containers.

The automatically illuminating **[840]** the tray and containers may comprise illuminating the tray and containers with substantially collimated light. The automatically positioning **[830]** the tray may comprise operating an articulated holding arm to automatically position the tray. The automatically positioning **[830]** the tray may be such that a planar surface of the tray is substantially perpendicular to the collimated light. The automatically filling **[860]** may comprise operating an articulated filling arm to automatically fill the at least a portion of the plurality of containers.

The automatically obtaining image information **[850]** may comprise imaging with a sensor disposed at a large enough distance from the retroreflector to collect largely the retroreflected light. In other embodiments, the automatically obtaining image information **[850]** may comprise imaging the tray and containers using a telecentric lens. The automatically obtaining image information **[850]** may in further implementations comprise imaging the tray and containers using a Fresnel lens and a fixed focal length lens. In using a Fresnel lens, the automatically illuminating **[840]** the tray and containers with light may comprise automatically illuminating the tray and containers with substantially monochromatic light.

Referring again to FIG. 3, an illuminator **15** may also be positioned under the tray. This can provide collimated light to the sensor **12** in addition to or instead of light received from above the tray. This lower illuminator may also be aseptically disposed in the floor of chamber **20** by, for example without limitation, disposing it behind a transparent window sealed aseptically to the floor of chamber **20,** inside or outside the chamber. Filling systems can also be implemented with other combinations of the illuminating, sensing, and/or reflecting elements. One example of such a system can include a floor-mounted illuminator, a floor- mounted sensor, and a roof-mounted retroreflector.

While this invention has been described as having an exemplary design, the present invention may be further modified within the scope of the invention as defined by the appended claims.

The drawings show, by way of illustration, specific embodiments in which the invention can be practiced. These embodiments are also referred to herein as "examples."

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

## Claims

1. A system for aseptically filling a tray of pharmaceutical containers with a pharmaceutical product, comprising:
a chamber (20) capable of maintaining an aseptic condition,
a sensor (12) aseptically disposed with respect to the chamber, the sensor having a sensing cone (14) within the chamber;
an articulated filling arm (40) and a tray (80) of pharmaceutical containers (90) disposed within the chamber, the articulated filling arm and the tray having a range of motion within the sensing cone,
a reflective surface (70) positioned within the sensing cone, wherein the reflective surface includes a retroreflector disposed to reflect to the sensor light from a light source (86), the light from the light source perpendicularly impinging on the tray (80) of pharmaceutical containers (90) such that openings of containers held by the tray exhibit high contrast with respect to tray to the sensor, the retroreflector (70) having a retroflective sheet (73) covered by a transparent sheet (77), the retroreflective sheet (73) being located underneath the base of the chamber (20) with the transparent sheet (77) aseptically embedded within the base of the chamber (20); and
a controller (13) in data communication with the sensor and with the filling arm and configured for:
obtaining image information from the sensor,
determining the locations of openings of the containers within the sensing cone based on the image information, and
automatically guiding the filling arm to fill the containers with the product based on the locations of openings of the containers.

2. The system of claim 1, wherein the light includes an illuminator (15, 86) disposed to illuminate the retroreflector with substantially collimated light.

3. The system of claim 2, further comprising a holding arm (30) for holding the tray, wherein:
the controller is in data communication with the holding arm, and
the controller is configured for automatically guiding, based on the image information, the holding arm to position the tray in a location in a light path between the illuminator and the retroreflector.

4. The system of claim 3, wherein the controller is configured for automatically guiding, based on the image information, the holding arm to position the tray such that a planar surface of the tray is substantially perpendicular to the collimated light.

5. The system of claim 2, wherein the sensor comprises the illuminator and an imager (88, 93), wherein the illuminator is disposed annularly about the imager.

6. The system of claim 2, wherein the sensor comprises an imaging detector (84, 94), a fixed focal length lens (82, 95), and a Fresnel lens (96).

7. The system of claim 6, wherein the illuminator provides substantially monochromatic light.

8. The system of claim 2, wherein the sensor comprises an imaging detector and a telecentric lens, wherein the imaging detector is disposed to receive the retroreflected light through the telecentric lens.

9. The system of claim 1, further comprising a stoppering arm (50) for stoppering the containers, wherein:
the controller is in data communication with the stoppering arm, and
the controller is configured for automatically guiding, based on the image information, the stoppering arm to stopper the containers.

10. A method for aseptically filling pharmaceutical containers with a product, the method comprising
establishing an aseptic condition within a chamber (810),
maintaining the aseptic condition while providing within the chamber a tray holding within openings in the tray a plurality of pharmaceutical containers (820),
automatically positioning the tray with the plurality of containers in an illumination path of an illuminator, and positioning a retroreflector to reflect light perpendicularly impinging on the tray and containers such that openings of containers held by the tray exhibit high contrast with respect to tray to a sensor (12), the retroreflector having a retroreflective sheet (73) covered by a transparent sheet (77), the retroreflective sheet (73) being located underneath the base of the chamber (20) with the transparent sheet (77) aseptically embedded within the base of the chamber (20);
automatically directing light from the illuminator through the tray and containers (840),
automatically obtaining image information about the tray and containers based on light received through the containers (850) by the sensor,
identifying based on the image information centers of openings of at least a portion of the plurality of containers (860), and
automatically filling the at least, a portion of the plurality of containers with the product based on the identified openings (870).

11. The method of claim 10, wherein the automatically filling comprises operating an articulated filling arm to automatically fill the at least a portion of the plurality of containers.

12. The method of claim 10, further comprising automatically stoppering the openings of the at least a portion of the plurality of containers (880), optionally wherein the automatically stoppering comprises:
operating an articulated stoppering arm to collect stoppers from known locations of stoppers, and
operating the articulated stoppering arm to stopper the openings of the at least a portion of the plurality of containers.

13. The method of claim 10, wherein the automatically illuminating the tray and containers comprises illuminating the tray and containers with substantially collimated light, optionally monochromatic light.

14. The method of claim 10, wherein the automatically positioning the tray comprises operating an articulated holding arm to automatically position the tray, optionally such that a planar surface of the tray is substantially perpendicular to collimated light from the illuminator.

## Patentansprüche

1. System zum aseptischen Abfüllen eines Trays von pharmazeutischen Behältern mit einen pharmazeutischen Produkt, umfassend:
eine Kammer (20), die in der Lage ist, einen aseptischen Zustand aufrechtzuerhalten,
einen Sensor (12), der in Bezug zur Kammer aseptisch angeordnet ist, wobei der Sensor einen Erfassungskegel (14) innerhalb der Kammer aufweist;
einen gelenkigen Befüllarm (40) und ein Tray (80) von pharmazeutischen Behältern (90), die in der Kammer angeordnet sind, wobei der gelenkige Befüllarm und das Tray einen Bewegungsbereich innerhalb des Erfassungskegels aufweisen,
eine innerhalb des Erfassungskegels positionierte reflektierende Oberfläche (70), wobei die reflektierende Oberfläche einen Rückstrahler aufweist, der so angeordnet ist, dass er das Sensorlicht aus einer Lichtquelle (86) reflektiert, wobei das Licht aus der Lichtquelle senkrecht auf das Tray (80) von pharmazeutischen Behältern (90) auftrifft, so dass Öffnungen von Tray-getragenen Behältern für den Sensor einen hohen Kontrast zum Tray darbieten, wobei der Rückstrahler (70) eine von einer transparenten Folie (77) bedeckte rückstrahlende Folie (73) aufweist, wobei die rückstrahlende Folie (73) unter der Grundfläche der Kammer (20) angeordnet ist und die transparente Folie (77) in der Grundfläche der Kammer (20) aseptisch eingebettet ist;
ein Steuergerät (13) in Datenkommunikation mit dem Sensor und mit dem Befüllarm und eingerichtet zum:
Gewinnen von Bildinformationen aus dem Sensor,
Bestimmen der Positionen von Öffnungen der Behälter innerhalb des Erfassungskegels anhand der Bildinformationen, und
automatisches Führen des Befüllarms zum Abfüllen der Behälter mit dem Produkt anhand der Positionen der Behälteröffnungen.

2. System nach Anspruch 1, wobei das Licht ein Beleuchtungselement (15, 86) aufweist, das so angeordnet ist, dass es den Rückstrahler mit einem im Wesentlichen kollimierten Licht beleuchtet.

3. System nach Anspruch 2, ferner umfassend: einen Haltearm (30) zum Halten des Trays, wobei:
das Steuergerät in Datenkommunikation mit dem Haltearm steht, und
das Steuergerät eingerichtet ist zum automatischen Führen des Haltearms anhand der Bildinformationen, um das Tray an einem Ort in einem Lichtpfad zwischen dem Beleuchtungselement und dem Rückstrahler zu positionieren.

4. System nach Anspruch 3, wobei das Steuergerät eingerichtet ist zum automatischen Führen des Haltearms anhand der Bildinformationen, um das Tray so zu positionieren, dass eine plane Oberfläche des Trays im Wesentlichen senkrecht zum kollimierten Licht ist.

5. System nach Anspruch 2, wobei der Sensor das Beleuchtungselement und einen Bildaufnehmer (88, 93) umfasst, wobei das Beleuchtungselement ringförmig um den Bildaufnehmer herum angeordnet ist.

6. System nach Anspruch 2, wobei der Sensor einen Bilddetektor (84, 94), ein Festbrennweitenobjektiv (82, 95) und eine Fresnel-Linse (96) umfasst.

7. System nach Anspruch 6, wobei das Beleuchtungselement ein im Wesentlichen monochromatisches Licht bereitstellt.

8. System nach Anspruch 2, wobei der Sensor einen Bilddetektor und ein telezentrisches Objektiv umfasst, wobei der Bilddetektor dazu eingerichtet ist, das zurückgestrahlte Licht durch das telezentrische Objektiv zu empfangen.

9. System nach Anspruch 1, ferner umfassend einen Verschließarm (50) zum Verschließen der Behälter, wobei:
das Steuergerät in Datenkommunikation mit dem Verschließarm steht, und
das Steuergerät eingerichtet ist zum automatischen Führen des Verschließarms anhand der Bildinformationen, um die Behälter zu verschließen.

10. Verfahren zum aseptischen Abfüllen von pharmazeutischen Behältern mit einen Produkt, wobei das Verfahren umfasst:
Herstellen eines aseptischen Zustands in einer Kammer (810),
Aufrechterhalten des aseptischen Zustands in der Kammer bei gleichzeitiger Bereitstellung eines Trays, das in Öffnungen im Tray mehrere pharmazeutische Behälter (820) hält,
automatisches Positionieren des Trays mit den mehreren Behältern in einem Beleuchtungspfad eines Beleuchtungselements, und Positionieren eines Rückstrahlers, um ein auf das Tray und die Behälter senkrecht auftreffendes Licht so zu reflektieren, dass Öffnungen von Tray-getragenen Behältern für einen Sensor (12) einen hohen Kontrast zum Tray darbieten, wobei der Rückstrahler eine von einer transparenten Folie (77) bedeckte rückstrahlende Folie (73) aufweist, wobei die rückstrahlende Folie (73) unter der Grundfläche der Kammer (20) angeordnet ist und die transparente Folie (77) in der Grundfläche der Kammer (20) aseptisch eingebettet ist;
automatisches Hindurchführen von Licht aus dem Beleuchtungselement durch das Tray und die Behälter (840),
automatisches Gewinnen von Bildinformationen über das Tray und die Behälter basierend auf dem vom Sensor durch die Behälter (850) hindurch empfangenen Licht,
Feststellen von Mittelpunkten von Öffnungen mindestens eines Teils der mehreren Behälter (860) basierend auf den Bildinformationen, und
automatisches Abfüllen des mindestens einen Teils der mehreren Behälter mit dem Produkt basierend auf den festgestellten Öffnungen (870).

11. Verfahren nach Anspruch 10, wobei das automatische Abfüllen umfasst: Betätigen eines gelenkigen Befüllarms, um den mindestens einen Teil der mehreren Behälter automatisch zu abzufüllen.

12. Verfahren nach Anspruch 10, ferner umfassend: automatisches Verschließen der Öffnungen des mindestens einen Teils der mehreren Behälter (880), wobei optional das automatische Verschließen umfasst:
Betätigen eines gelenkigen Verschließarms, um Verschlussstopfen aus bekannten Lagerplätzen von Verschlussstopfen zu holen, und
Betätigen des gelenkigen Verschließarms, um die Öffnungen des mindestens einen Teils der mehreren Behälter zu verschließen.

13. Verfahren nach Anspruch 10, wobei das automatische Beleuchten des Trays und der Behälter umfasst: Beleuchten des Trays und der Behälter mit einem im Wesentlichen kollimierten Licht, optional monochromatischen Licht.

14. Verfahren nach Anspruch 10, wobei das automatische Positionieren des Trays umfasst:
Betätigen eines gelenkigen Haltearms zum automatischen Positionieren des Trays, optional dergestalt, dass eine plane Oberfläche des Trays im Wesentlichen senkrecht zu dem kollimierten Licht aus dem Beleuchtungselement ist.

## Revendications

1. Système de remplissage aseptique d'un plateau de contenants pharmaceutiques avec un produit pharmaceutique, comprenant :
une chambre (20) capable de maintenir un état aseptique,
un capteur (12) disposé de manière aseptique par rapport à la chambre, ledit capteur comportant un cône de détection (14) à l'intérieur de la chambre;
un bras de remplissage articulé (40) et un plateau (80) de contenants pharmaceutiques (90) disposés à l'intérieur de la chambre, ledit bras de remplissage articulé et ledit plateau présentant une gamme de mouvement à l'intérieur du cône de détection,
une surface réfléchissante (70) positionnée à l'intérieur du cône de détection, ladite surface réfléchissante comportant un rétroréflecteur disposé de manière à réfléchir la lumière de capteur venant d'une source lumineuse (86), ladite lumière en provenance de la source lumineuse frappant perpendiculairement le plateau (80) de contenants pharmaceutiques (90) de telle façon que des orifices de contenants portés par le plateau présentent au capteur un contraste élevé par rapport au plateau, ledit rétroréflecteur (70) comportant une feuille rétroréfléchissante (73) recouverte par une feuille transparente (77), ladite feuille rétroréfléchissante (73) étant située au-dessous de la base de la chambre (20) et ladite feuille transparente (77) étant aseptiquement incorporée à l'intérieur de la base de la chambre (20);
un contrôleur (13) en communication informatique avec le capteur et avec le bras de remplissage et configuré pour :
obtenir des informations d'image venant du capteur,
déterminer les positions d'orifices des contenants à l'intérieur du cône de détection sur la base des informations d'image, et
guider le bras de remplissage de manière automatique pour remplir les contenants avec le produit sur la base des positions d'orifices des contenants.

2. Système selon la revendication 1, dans lequel la lumière comprend un illuminateur (15, 86) disposé pour illuminer le rétroréflecteur avec une lumière essentiellement collimatée.

3. Système selon la revendication 2, comprenant également un bras porteur (30) pour porter le plateau, dans lequel :
le contrôleur est en communication informatique avec le bras porteur, et
le contrôleur est configuré pour guider de manière automatique le bras porteur sur la base des informations d'image afin de placer le plateau en une position dans le trajet lumineux entre l'illuminateur et le rétroréflecteur.

4. Système selon la revendication 3, dans lequel le contrôleur est configuré pour guider de manière automatique le bras porteur sur la base des informations d'image afin de positionner le plateau de telle façon qu'une surface plane du plateau soit essentiellement perpendiculaire à la lumière collimatée.

5. Système selon la revendication 2, dans lequel le capteur comprend l'illuminateur et un imageur (88, 93), ledit illuminateur étant disposé de manière annulaire autour de l'imageur.

6. Système selon la revendication 2, dans lequel le capteur comprend un détecteur d'imagerie (84, 94), un objectif à distance focale fixe (82, 95) et une lentille de Fresnel (96).

7. Système selon la revendication 6, dans lequel l'illuminateur fournit une lumière essentiellement monochromatique.

8. Système selon la revendication 2, dans lequel le capteur comprend un détecteur d'imagerie et un objectif télécentrique, ledit détecteur d'imagerie étant disposé pour recevoir la lumière rétroréfléchie à travers l'objectif télécentrique.

9. Système selon la revendication 1, comprenant également un bras de bouchage (50) pour boucher les contenants, dans lequel :
le contrôleur est en communication informatique avec le bras de bouchage, et
le contrôleur est configuré pour guider de manière automatique le bras de bouchage sur la base des informations d'image afin de boucher les contenants.

10. Procédé de remplissage aseptique de contenants pharmaceutiques avec un produit, ledit procédé comprenant les étapes consistant à
établir un état aseptique à l'intérieur d'une chambre (810),
maintenir un état aseptique tout en fournissant, à l'intérieur de la chambre, un plateau portant une pluralité de contenants pharmaceutiques dans des ouvertures du plateau (820),
positionner de manière automatique le plateau avec la pluralité de contenants dans un trajet lumineux d'un illuminateur, et positionner un rétroréflecteur pour réfléchir une lumière frappant perpendiculairement le plateau et les contenants de telle façon que des orifices de contenants portés par le plateau présentent au capteur (12) un contraste élevé par rapport au plateau, ledit rétroréflecteur comportant une feuille rétroréfléchissante (73) recouverte par une feuille transparente (77), ladite feuille rétroréfléchissante (73) étant située au-dessous de la base de la chambre (20) et ladite feuille transparente (77) étant aseptiquement incorporée à l'intérieur de la base de la chambre (20);
diriger de manière automatique la lumière venant de l'illuminateur à travers le plateau et les contenants (840),
obtenir de manière automatique des informations d'image relatives au plateau et aux contenants sur la base de la lumière reçue à travers les contenants (850) par le capteur,
identifier, sur la base des informations d'image, des centres d'orifices d'au moins une partie de la pluralité de contenants (860), et
remplir de manière automatique ladite au moins une partie de la pluralité de contenants avec le produit sur la base des orifices identifiés (870).

11. Procédé selon la revendication 10, dans lequel le remplissage automatique comprend l'étape consistant à actionner un bras de remplissage articulé pour remplir de manière automatique ladite au moins une partie de la pluralité de contenants.

12. Procédé selon la revendication 10, comprenant également l'étape consistant à boucher de manière automatique les orifices de ladite au moins une partie de la pluralité de contenants (880), dans lequel, en option, le bouchage automatique comprend l'étape consistant à :
actionner un bras de bouchage articulé pour prendre de manière automatique des bouchons dans des emplacements connus, et
actionner le bras de bouchage articulé pour boucher les orifices de ladite au moins une partie de la pluralité de contenants.

13. Procédé selon la revendication 10, dans lequel l'illumination automatique du plateau et des contenants comprend l'étape consistant à illuminer le plateau et les contenants avec une lumière essentiellement collimatée, en option une lumière monochromatique.

14. Procédé selon la revendication 10, dans lequel le positionnement automatique du plateau comprend l'étape consistant à actionner un bras porteur articulé pour positionner de manière automatique le plateau, en option de telle façon qu'une surface plane du plateau soit perpendiculaire à la lumière collimatée venant de l'illuminateur.
